# EUROPÄISCHE PATENTSCHRIFT

(11) **EP 2 248 696 B1**
(45) Veröffentlichungstag und Bekanntmachung des Hinweises auf die Patenterteilung: **08.04.2015**
(21) Anmeldenummer: 09159294.9
(22) Anmeldetag: 04.05.2009
(51) Int. Cl.: B60K 15/077

(54) **Verwendung eines Kraftstofftanks mit Ausgleichsleitung**
Use of a fuel tank with compensation conduit
Utilisation d'un réservoir de carburant doté d'une conduite de compensation

(43) Veröffentlichungstag der Anmeldung: 10.11.2010
(73) Patentinhaber: Ford Global Technologies, LLC, Dearborn, MI 48126 (US)
(72) Erfinder: Schoenfuss, Steffen, 51519 Odenthal (DE); Christina, Kallas, 51107 Köln (DE)
(74) Vertreter: Drömer, Hans-Carsten

(56) Entgegenhaltungen:
- EP-A- 1 803 650
- DE-A1- 3 040 160
- DE-A1- 4 202 643
- DE-A1-102004 011 119
- JP-A- 59 143 723
- JP-A- 62 191 220

## Beschreibung

Die Erfindung betrifft eine Verwendung eines Mediumbehälters für Betriebsmedien eines Kraftfahrzeuges, der eine in Fahrtrichtung des Kraftfahrzeuges angeordnete Vorderwand und eine dazu gegenüberliegende Hinterwand und eine Deckelwand aufweist.

Die DE 30 40 160 A1 offenbart eine Tankanordnung mit einem zumindest zwei Dome aufweisenden Tank. Der Tank weist eine Hülle auf, welche eine Deckwelwand, eine Bodenwand, und wohl auch Seitenwände hat. Denkbar ist auch, dass der Kraftstoff in dem Kraftstofftank bei Lastwechseln so in Bewegung bringbar ist, dass eine Schwappwelle aufweisend eine Flüssigkeitswand bildbar ist, wobei die schwappwelle beispielsweise an der Vorderwand anschlägt. Innerhalb des Kraftstofftanks ist eine Domentlüftungsleitung angeordnet, welche dükerartig ausgeführt mit ihren beidseitigen Enden innerhalb der Dome angeordnet ist. Die Domentlüftungsleitung soll dafür Sorge tragen, dass der Kraftstofftank bei einem Tankvorgang in seinem ganzen Volumen befüllt werden kann, auch wenn sich Kraftstoff in der Domentlüftungsleitung befindet. Dazu schlägt die DE 30 40 160 A1 in einer Ausgestaltung vor, dass von einem der Dome eine in den Einfüllstutzen einmündende Tankentlüftungsleitung abgeht, so dass deren domseitige Ende mit einem zugekehrten Ende der Domentlüftungsleitung eine Strahlpumpe bildet. Bei einer anderen Ausgestaltung ist vorgesehen, dass von einem der Dome ein in den Einfüllstutzen einmündende Tankentlüftungsleitung abgeht, wobei deren domseitiges Ende mit einem zugekehrten Ende einer Verbindungsleitung, welche in der Domentlüftungsleitung mündet eine Strahlpumpe mündet.

Die DE 10 2004 011 119 A1 befasst sich mit einem Kraftstofftank mit Entlüftungsanlage. Ein Entlüftungstrakt verbindet zwei Entlüftungsöffnungen miteinander, wobei der Entlüftungstrakt über einen Tropfenabscheider zu einer Rückführleitung in den Tankeinfüllstutzen sowie zu einer Zusatzleistung führt, die zu einem Aktivkohle führt, welcher zur Ableitung der Kraftstoffdämpfe dient.

Der Zusammenfassung der JP 62 191 220 A ist ein Kraftstofftank mit zwei Kammern entnehmbar, in welchen unterschiedliche Drücke herrschen und aufrechterhalten werden sollen, so dass lediglich eine Pumpe ausreicht Kraftstoff zu fördern.

Die EP 1 803 650 A1 offenbart einen Kunststoffbehälter mit einem Griff. Der Griff weist einen hohlen Innenraum auf, welcher mit einem Belüftungskanal in Strömungsverbindung

Derartige Mediumbehälter sind zum Beispiel als Kraftstofftank bekannt. Dieser weist eine, ein Aufnahmevolumen umgebende Hülle auf, welche in unterschiedlichen geometrischen Ausgestaltungen ausgeführt sein kann. Denkbar ist zum Beispiel einen Kraftstofftank im Querschnitt gesehen rechteckig oder rund auszuführen, um nur einige nicht beschränkend wirkende Beispiele zu nennen. Grundsätzlich ist zumindest ein Abschnitt der Hülle in Fahrtrichtung des Fahrzeuges, also in Längsrichtung des Fahrzeugs in Richtung zur Front des Kraftfahrzeuges orientiert. Dieser Abschnitt kann auch als Vorderwand definiert werden. Ein dazu gegenüberliegender Abschnitt der Hülle kann korrespondierend dazu als Hinterwand bezeichnet werden. Die Hinterwand ist demnach in Richtung zum Heck des Fahrzeuges orientiert. Zwischen den beiden genannten Abschnitten ist jeweils ein weiterer Abschnitt der Hülle angeordnet, welcher insofern jeweils als Seitenwand bezeichnet werden kann. Zudem weist die Hülle eine Bodenwand und die Deckelwand auf. Die Bodenwand und die Deckelwand erstrecken sich im Wesentlichen in einer Horizontalrichtung, wobei die Vorder-, Hinter und die jeweilige Seitenwand in einer Hochrichtung verlaufend zwischen der Bodenwand und der Deckelwand angeordnet sind.

Bei Fahrtbewegungen des Kraftfahrzeuges gelangt das in dem Mediumbehälter gespeicherte Medium, also z. B. der Kraftstoff in dem Kraftstofftank in Bewegung. Insbesondere bei einer negativen Beschleunigung, also zum Beispiel bei einem Bremsvorgang schwappt der Kraftstoff an die Vorderwand, wodurch so genannte Schwappgeräusche entstehen. Dies kann wie folgt geschehen:

Zunächst entstehen bei einem Bremsvorgang im Wesentlichen horizontale Wellen, wobei im Inneren des Mediumbehälters zwischen der Mediumoberfläche und der Deckelwand ein statischer Druck herrscht. Hieraus bildet sich eine wachsende Welle aufgrund der Trägheit des Mediums. Diese Welle kontaktiert mit ihrem Wellenkamm die Deckelwand, und schließt so ein Luftvolumen zwischen sich und der Vorderwand ein. In dem eingeschlossenen Volumen herrscht noch ein statischer Druck, der auch zwischen der Welle und der Hinterwand herrscht. Bei einer weiteren Bewegung der Welle in Richtung zur Vorderwand wird das eingeschlossene Volumen, bzw. die Luft in dem isolierten Zwischenraum verdichtet, wodurch hier ein Überdruck entsteht. Zwischen der Welle und der Hinterwand entsteht ein Unterdruck. Bei weiterer Bewegung der Welle in Richtung zur Vorderwand wird das eingeschlossene Volumen weiter verdichtet, bis der Überdruck einen derartigen Betrag aufweist, dass das eingeschlossene Volumen entlang eines Ausgleichweges z. B. zwischen dem Wellenkamm und der Deckelwand oder durch das Medium hindurch aus der eingeschlossenen Kammer entweicht. Dadurch entsteht in der eingeschlossenen Kammer ein Vakuum. Dabei schwappt das Medium bzw. der Kraftstoff an die Vorderwand. Dieses schlagartige anschwappen bzw. das Schwappgeräusch kann von Fahrzeuginsassen als störend empfunden werden.

Das Schwappgeräusch entsteht also dadurch, dass in dem Mediumbehälter eine Schwappwelle gebildet wird, welche den Mediumbehälter bzw. den Kraftstofftank in zwei voneinander getrennte Bereiche unterteilt, in denen unterschiedliche Druckbeträge herrschen. Bewegt sich die Schwappwelle weiter in Richtung zur Vorderwand, wird das eingeschlossene Volumen weiter verdichtet, und entweicht entweder durch das Medium bzw. durch den Kraftstoff hindurch oder zwischen Wellenkamm und Deckelwand zur Unterdruckseite. Dieses Entweichen bewirkt ein Vakuum in dem eingeschlossenen Volumen, welches die Schwappwelle in Richtung zur Vorderwand zieht, was in dem Schwappgeräusch resultiert.

Insbesondere bei den heutigen Bestrebungen zur Kraftstoffeinsparung ist es bekannt die so genannte Start/Stopp Strategie anzuwenden. Hierbei wird zumindest der Verbrennungsmotor automatisch abgestellt, wenn das Fahrzeug für eine bestimmte Zeitdauer steht, also aus der Fahrt zum Stillstand abgebremst wird. Diesbezüglich wird auf den Stand der Technik verwiesen. Durch das Abbremsen gelangt das Medium bzw. die Flüssigkeit in dem Mediumbehälter in Bewegung, wodurch die oben beschriebene Schwappwelle und somit das Schwappgeräusch entstehen kann. Wird aber der Verbrennungsmotor und eventuell auch andere Verbraucher abgestellt, ist das Schwappgeräusch besonders wahrnehmbar, da andere Geräuschemittenten abgeschaltet sind, welche das Schwappgeräusch akustisch überlagern könnten, weswegen das Schwappgeräusch nicht so extrem oder gar nicht wahrnehmbar wäre.

Der Erfindung liegt die Aufgabe zugrunde, einen Mediumbehälter der Eingangs genannten Art mit einfachen Mittel so zu verbessern, dass Schwappgeräusche vermeidbar sind.

Erfindungsgemäß wird die Aufgabe durch eine Verwendung eines Mediumbehälters mit den Merkmalen des Anspruchs 1 gelöst, wobei zumindest ein Druckausgleichselement vorgesehen ist, das eine erste Öffnung, einen Verbindungsabschnitt und eine zweite Öffnung aufweist, wobei die erste Öffnung im Bereich der Vorderwand angeordnet ist, und wobei die dazu gegenüberliegende, zweite Öffnung über den Verbindungsabschnitt in Richtung zur Hinterwand geführt ist, und wobei beide Öffnungen im Inneren des Mediumbehälters angeordnet sind.

In günstiger Ausgestaltung ist das zumindest eine Ausgleichselement als Kanal und/oder Rohrleitung ausgeführt, wobei das zumindest eine Ausgleichselement eine Kommunikationsleitung zwischen einem eingeschlossenen Volumen zwischen einer Schwappwelle und z. B. der Vorderwand und dem davon getrennten Behälterbereich bildet. Über das zumindest eine Ausgleichselement kann so ein Druckausgleich zwischen beiden voneinander getrennten Behälterbereichen stattfinden. Ist das Ausgleichselement als Rohrleitung ausgeführt, kann dieses außerhalb oder innerhalb des Mediumbehälters angeordnet sein, worauf weiter unten näher eingegangen wird. Ist das Ausgleichselement als Kanal ausgeführt, kann dieses z. B. in der Deckelwand angeordnet sein.

Der Erfindung liegt die Erkenntnis zugrunde, dass das Medium bzw. die in dem Mediumbehälter gespeicherte Flüssigkeit z. B. bei einem Bremsvorgang des Kraftfahrzeuges in Schwappbewegungen geraten kann, wodurch sich eine Schwappwelle bilden kann, welche mit ihrem Wellenkamm die Deckelwand kontaktieren kann. Hierdurch entstehen in dem Mediumbehälter durch die Schwappwelle voneinander getrennte Bereich, in welchen ein unterschiedlicher Druck herrschen kann. Wie eingangs bereits beschrieben, kann ein Vakuum entstehen, welches die Schwappwelle schlagartig z. B. gegen die Vorderwand schlagen läßt. Mit der Erfindung dagegen wird vorteilhaft erreicht, dass ein solches schlagartiges Anschlagen der Schwappwelle vermieden ist, da über das zumindest eine Ausgleichselement ein stetiger bzw. kontinuierlicher Druckausgleich zwischen beiden Bereichen des Mediumbehälters stattfinden kann.

Wesentlich ist, dass eine Bildung von einem Überdruck in dem vormals eingeschlossenen Volumen ausgeschlossen ist, denn durch das zumindest eine Ausgleichselement ist ein Luftpfad bereitgestellt, welcher das sich bei fortschreitender Bewegung der Schwappwelle in Richtung zur Vorderwand in dem quasi eingeschlossenen Volumen verdichtende gasförmige Medium (Luft) aus dem vormals eingeschlossenen Volumen gezielt ableitet, und zwar in Richtung zur zweiten Öffnung, welche zweckmäßiger Weise innerhalb des anderen Bereiches (Flüssigkeitswand zwischen Hinterwand, Wellenkamm und Deckelwand) des Mediumbehälters angeordnet ist.

Mit dem Ausgleichselement wird das vormals eingeschlossene Volumen also zum anderen Bereich im Inneren des Mediumbehälters hin geöffnet.

Insofern wird mit der Erfindung vorteilhaft ein Entstehen eines Überdrucks in dem vormals eingeschlossenen Volumen, ein schlagartiger Druckausgleich zwischen beiden Bereichen des Mediumbehälters, welche durch die Schwappwelle von einander getrennt sind, und das Entstehen eines Vakuums in dem vormals eingeschlossenen Volumen, welches die Schwappwelle in Richtung z. B. zur Vorderwand ziehen bzw. weiter beschleunigen könnte, vermieden. Selbstverständlich gelangt die Schwappwelle dennoch z. B. an die Vorderwand. Allerdings ist die Intensität des Anschwappens bzw. des Anschlagens erheblich reduziert, wodurch auch das Schwappgeräusch selbst erheblich reduziert ist. Dies ist insbesondere vorteilhaft, wenn das Medium in dem Mediumbehälter durch ein Abbremsen in Schwappbewegung gerät und der Verbrennungsmotor gemäß einer Start/Stopp-Strategie abgestellt wird.

Das Ausgleichselement kann in einer ersten Ausgestaltung der Erfindung mit seinem Verbindungsabschnitt außerhalb des Mediumbehälters angeordnet sein. Zweckmäßiger Weise können die beiden Öffnungen dabei mittels Übergangsabschnitten in das Innere des Mediumbehälters geführt sein. Bevorzugt können die Öffnungen dabei durch die Deckelwand geführt sein, wobei hinreichende Abdichtungsvorrichtungen vorgesehen sein können. Möglich ist, mit geeigneten Mitteln ein Eintritt des Mediums in das Ausgleichselement zu vermeiden, so dass bevorzugt nur gasförmiges Medium, also Luft in das Ausgleichselement eintreten kann. Aber selbst wenn solche Maßnahmen nicht vorgesehen sind, wäre es nicht schädlich, wenn Medium in das Ausgleichselement eintreten würde.

Natürlich ist die Anordnung durch die Deckelwand hindurch lediglich beispielhaft zu verstehen. Denkbar ist auch, die erste Öffnung durch die Vorderwand oder eine der Seitenwände zu führen, was so korrespondierend auch für die zweite Öffnung gilt. Natürlich sollten die Öffnungen dabei in einem oberen Bereich, also nahe der Deckelwand angeordnet sein.

Selbstverständlich kann es auch zweckmäßig sein, das zumindest eine Ausgleichselement vollständig, also mit seinen beiden Öffnungen und seinem Verbindungsabschnitt innerhalb des Mediumbehälters anzuordnen.

Erfindungsgemäss erstreckt sich das Druckausgleichselement im Querschnitt gesehen von der Vorderwand bis zur Hinterwand, wobei beide Öffnungen innerhalb des Mediumbehälters angeordnet sind. Natürlich kann auch vorgesehen sein, dass das Ausgleichselement einen anderen Verlauf aufweist.

Natürlich kann nicht nur ein einziges Ausgleichselement an dem Mediumbehälter angeordnet sein. Vielmehr können auch mehrere Ausgleichselemente an dem Mediumbehälter angeordnet sein. Zweckmäßiger Weise ist das zumindest eine bzw. sind die Ausgleichselemente so dimensioniert und angeordnet, dass ein Druckausgleich zwischen beiden Bereichen des Mediumbehälters, also zum einem zwischen Flüssigkeitswand (Schwappwelle), Vorderwand und Deckelwand und zum anderen zwischen Flüssigkeitswand (Schwappwelle), Deckelwand und Hinterwand sichergestellt ist.

In bevorzugter Ausführung ist der Mediumbehälter ein Kraftstofftank, wobei das Medium selbst eine Flüssigkeit, also z. B. Kraftstoff ist. Der Mediumbehälter kann im Querschnitt gesehen mit unterschiedlichen geometrischen Ausgestaltungen ausgeführt sein.

Selbstverständlich erfährt das Kraftfahrzeug nicht nur Bewegungen in oder entgegen seiner Längsrichtung (Beschleunigen oder Bremsen). Vielmehr erfährt das Kraftfahrzeug auch Lastwechsel um seine Längsachse (Lenken). Auch bei diesen Lastwechseln kann das Betriebsmedium (z. B. Kraftstoff) schwappen, so dass entsprechende Schwappgeräusche entstehen können. Es liegt daher durchaus im Sinne der Erfindung zumindest ein oder mehrere Ausgleichelemente so vorzusehen und so anzuordnen, dass die bei Lastwechseln möglicherweise entstehenden Kammern in dem Mediumbehälter entsprechend hinterlüftet werden. Das zumindest eine Ausgleichselement kann also nicht nur in Längsrichtung des Fahrzeugs verlaufend angeordnet sein, vielmehr können auch ein oder mehrere in Querrichtung des Fahrzeugs verlaufende Ausgleichselemente vorgesehen sein. Natürlich kann das zumindest eine Ausgleichselement bezogen auf die Längsachse des Kraftfahrzeuges in unterschiedlichen Winkelbeträgen verlaufend angeordnet sein. Insofern liegt es im Bereich der Erfindung, einen Mediumbehälter mit einem Netz von Ausgleichselementen zu versehen, welches bzw. welche die Intensität von Schwappgeräusche bei allen möglichen Lastwechseln (Lenken, Beschleunigen, Bremsen) durch hinterlüften der entsprechenden Kammer zumindest reduziert, und/oder Schwappgeräusche verhindert.

Die Figuren 1a bis 1e zeigen einen Mediumbehälter nach dem Stand der Technik.

Weitere vorteilhafte Ausgestaltungen der Erfindung sind in den Unteransprüchen und der folgenden Figurenbeschreibung offenbart. Es zeigen:
- Fig. 2: einen Mediumbehälter im Querschnitt mit Ausgleichselement in einer ersten Phase einer Schwappbewegung,
- Fig. 3: den Mediumbehälter aus Figur 1 im Querschnitt mit Ausgleichselement in einer zweiten Phase der Schwappbewegung,
- Fig. 4: den Mediumbehälter aus Figur 1 im Querschnitt mit Ausgleichselement in einer dritten Phase der Schwappbewegung,
- Fig. 5: den Mediumbehälter aus Figur 1 im Querschnitt mit Ausgleichselement in einer vierten Phase der Schwappbewegung,

In den unterschiedlichen Figuren sind gleiche Teile stets mit denselben Bezugszeichen versehen, so dass diese in der Regel auch nur einmal beschreiben werden.

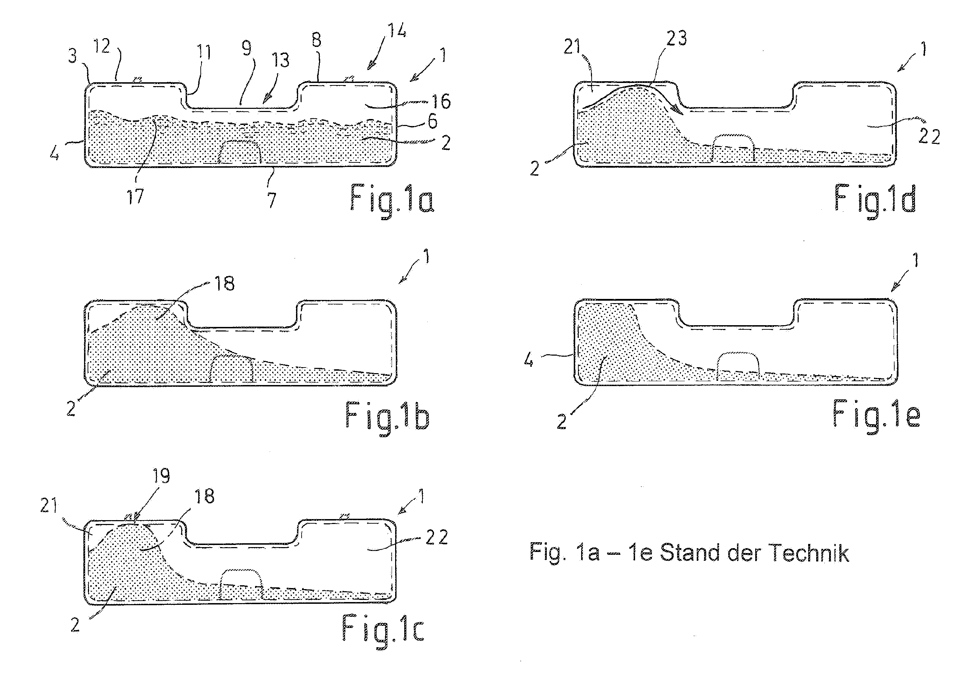

Figur 1a bis 1e zeigen einen Mediumbehälter 1 nach dem Stand der Technik, der als Kraftstofftank für ein Kraftfahrzeug ausgeführt ist. In dem Mediumbehälter 1 ist eine Betriebsflüssigkeit 2, z. B. Kraftstoff gespeichert. Beispielhaft ist der Mediumbehälter 1 im Querschnitt gesehen rechteckig ausgeführt. Natürlich kann der Mediumbehälter 1 im Querschnitt gesehen auch andere geometrische Ausgestaltungen aufweisen. Der bekannte Mediumbehälter 1 weist eine, ein Volumen umschließende Hülle 3 auf. Die Hülle 3 weist Wandabschnitte 4, 6, 7 und 8 auf. Der Wandabschnitt 4 ist in Richtung zu einer Fahrzeugfront, also in Fahrtrichtung des Fahrzeuges angeordnet, und kann als Vorderwand 4 bezeichnet werden. Der dazu gegenüberliegende Wandabschnitt 6 kann als Hinterwand 6 bezeichnet werden. Aufgrund der gewählten Darstellung sind Wandabschnitte der Hülle 3, welche als Seitenwände bezeichnet werden können, nicht erkennbar. Der Wandabschnitt 7 kann als Bodenwand 7 bezeichnet werden, wobei der zur Bodenwand 7 gegenüberliegende Wandabschnitt 8 als Deckelwand 8 bezeichnet werden kann.

Die Deckelwand 8 ist im Querschnitt gesehen U-förmig mit einem Basissteg 9 und zwei U-Schenkeln 11 ausgeführt, welche jeweils in einen Fortsatz 12 übergehen, von denen einer an der Vorderwand 4 und der andere an der Hinterwand 6 anschließt.

Die U-Schenkel 11 sind beispielhaft so ausgeführt, dass der Basissteg 9 bezogen auf die Fortsätze 12 in Richtung zur Bodenwand 7 verlagert ist. Die Deckelwand 8 weist so eine Vertiefung 13 auf. Insofern weist der Mediumbehälter 1 im Bereich der Fortsätze 12 quasi Erhöhungen 14 auf.

Lediglich beispielhaft ist der Mediumbehälter 1 zur Hälfte mit dem Medium 2 gefüllt. Im Inneren 16 des Mediumbehälters 1 ist oberhalb der Mediumoberfläche gasförmiges Medium bzw. Luft angeordnet.

Bei einem Bremsvorgang bzw. bei einer negativen Beschleunigung des Kraftfahrzeuges entstehen überwiegend horizontale Wellen 17. Im Inneren 16 des Mediumbehälters herrscht eine statischer Druck (Fig. 1a).

Aufgrund der Trägheit der Betriebsflüssigkeit 2 bildet sich im Bereich der Vorderwand 4 eine Schwappwelle 18, welche sich in Richtung zur Vorderwand 4 bewegt. Im Inneren 16 des Mediumbehälters herrscht eine statischer Druck (Fig. 1 b).

Die Schwappwelle 18 gelangt mit ihrem Wellkamm 19 in Kontakt mit der Deckelwand 8. Hierdurch werden im Inneren 16 des Mediumbehälters 1 zwei Bereiche 21 und 22 gebildet, welche durch die Flüssigkeitswand (Schwappwelle 18) von einander getrennt sind. Der Bereich 21 ist vollständig von der Schwappwelle 18, der Vorderwand 4 und der Deckelwand 8 eingeschlossen. Der Bereich 22 ist in der Zeichnungsebene rechts zur Schwappwelle 18 angeordnet. Durch die Schwappwelle 18 wird das in dem Bereich 21 eingeschlossene Volumen verdichtet. Im Bereich 21 herrscht bezogen auf den Bereich 22 ein Überdruck (Fig. 1c).

Durch die weitere Bewegung der Schwappwelle 18 in Richtung zur Vorderwand 4, wird das in dem Bereich 21 eingeschlossene Volumen weiter verdichtet, bis der Überdruck einen solchen Betrag aufweist, dass das Volumen beispielhaft zwischen dem Wellenkamm 19 und der Deckelwand 8 in Richtung zum Bereich 22 ausweicht. Dies ist in Figur 1d beispielhaft mittels des Pfeils 23 dargestellt.

Durch den Druckausgleich im Bereich 21 wird ein Vakuum erzeugt, welches die Schwappwelle 18 in Richtung zur Vorderwand 4 zieht, so dass die Schwappwelle 18 intensiv an der Vorderwand 8 anschlägt (Fig. 1 e).

Dieses Anschwappen bzw. anschlagen kann von Fahrzeuginsassen wahrgenommen und als störend empfunden werden. Dieses Schwappgeräusch kann um so intensiver wahrgenommen werden, wenn der Verbrennungsmotor z. B. aufgrund einer Start/Stopp-Strategie zur Verbrauchsreduzierung abgeschaltet wird, und/oder wenn andere Geräuschemittenten außer Betrieb sind.

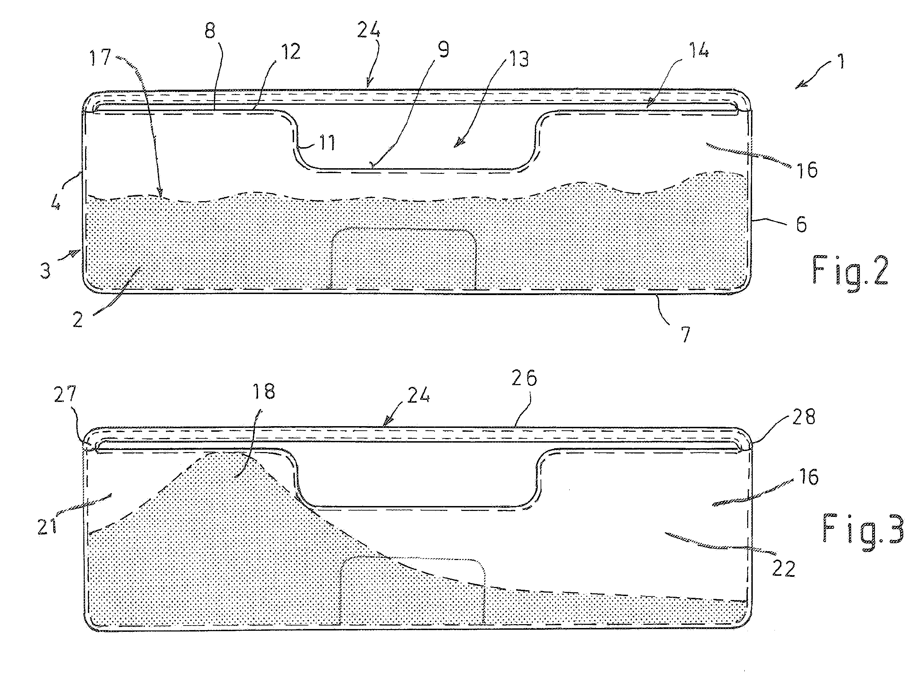

Mit der Erfindung wird diese Schwappgeräusch erheblich reduziert, wenn nicht sogar ausgeschaltet. Hierzu ist zumindest ein Ausgleichselement 24 vorgesehen, welches in den Figuren 2 bis 5 beispielhaft als Rohrleitung ausgeführt ist.

Das Ausgleichselement 24 weist eine erste und eine zweite Öffnung und einen die beiden Öffnungen verbindenden Verbindungsabschnitt 26 auf. Der Mediumbehälter 1 nach den Figuren 2 bis 5 weist die gleiche Ausgestaltung auf wie zu den Figuren 1a bis 1e beschrieben.

Die beiden Öffnungen des Ausgleichselementes 24 sind aufgrund der gewählten Darstellungen nicht erkennbar. Wesentlich ist, dass beide Öffnungen innerhalb des Mediumbehälters 1 angeordnet sind. Das Ausgleichselement 24 ist als separates Element mit seinem Verbindungsabschnitt 26 beispielhaft außerhalb des Mediumbehälters 1 angeordnet. Die erste Öffnung ist über einen Übergang 27 im Bereich der Vorderwand 4 durch die Deckelwand 8 geführt im Inneren 16 des Mediumbehälters 1 angeordnet. Der Verbindungsabschnitt 26 erstreckt sich im Querschnitt gesehen über die gesamte Länge des Mediumbehälters 1 bis zur Hinterwand 6, wobei ein Übergang 28 durch die Deckelwand 8 geführt ist, so dass die zweite Öffnung im Bereich der Hinterwand 6 im Inneren 16 des Mediumbehälters 1 angeordnet ist.

Wie Figur 2 zeigt, entstehen bei einem Bremsvorgang des Kraftfahrzeuges horizontale Wellen 17, welche zu der Schwappwelle 18 (Trägheit) anwachsen, wie bereits zu den Figuren 1a und 1b beschrieben. Auch entstehen die beiden durch die Flüssigkeitswand (Schwappwelle 18) von einander getrennten Bereiche 21 und 22.

Im Unterschied zum Stand der Technik (Fig. 1a bis 1e), wird mittels des Ausgleichelementes 24 eine Verbindung zwischen beiden Bereichen 21 und 22 hergestellt, was bedeutet, dass beide Bereiche 21 und 22 vorteilhaft nicht mehr von einander getrennt sind, sondern miteinander kommunizieren. Hierdurch wird ein stetiger bzw. kontinuierlicher Druckausgleich zwischen beiden Bereichen 21 und 22 bewirkt was dazu führt, dass in beiden Bereichen 21 und 22 jeweils ein statischer Druck gleichen Betrages herrscht.

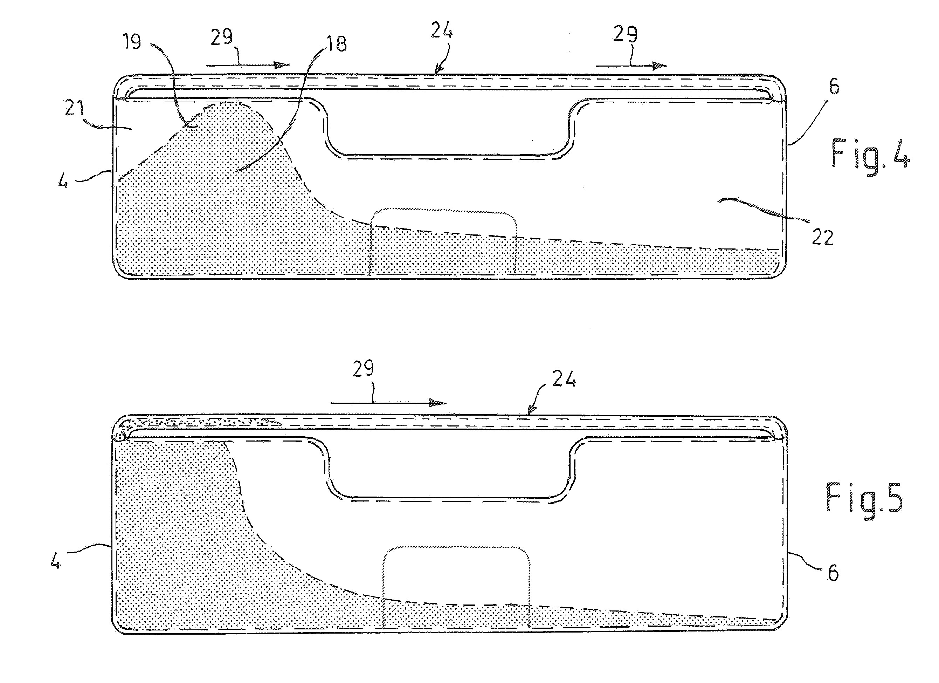

Damit ist mit einfachen Mitteln, nämlich mit dem Ausgleichselement 24 vermieden, dass im Bereich 21 ein Überdruck erzeugt werden könnte, wobei das im Bereich 21 vormals eingeschlossene Volumen nicht mehr schlagartig entweichen muß, so dass im Bereich 21 ein Vakuum erzeugt würde, welches die Schwappwelle 18 in Richtung zur Vorderwand 4 ziehen würde. Vielmehr kann das im Bereich 21 sich verdichtenden Volumen (aufgrund der Bewegung der Schwappwelle 18) kontinuierlich in Richtung zum damit verbundenen Bereich 22 gezielt abgeleitet werden. Die Strömungsrichtung des abgeleiteten Volumens ist mittels der Pfeile 29 dargestellt (Fig. 4 und 5). Damit wird das Schwappgeräusch erheblich reduziert, so dass die Fahrzeuginsassen dieses z. B. bei abgeschaltetem Verbrennungsmotor (Start/Stopp-Strategie) wohl nicht mehr wahrnehmen.

Der Figur 5 ist noch entnehmbar, dass das Medium durch die erste Öffnung in den Verbindungsabschnitt 26 gelangt, was aber nicht weiter schädlich ist.

Natürlich soll die Erfindung nicht auf die beispielhafte Ausgestaltung wie zu Figuren 2 bis 5 beschrieben beschränkt sein. Vielmehr umfaßt die Erfindung generell eine Reduzierung von Schwappgeräuschen in Mediumbehältern für Kraftfahrzeuge, wobei einfach das erfindungsgemäße Ausgleichelement 24 vorgesehen werden kann. Das Ausgleichelement kann serienmäßig vorgesehen sein, oder nachgerüstet werden. Selbstverständlich kann auch vorgesehen sein, ein oder mehrere Ausgleichselemente in einer bezogen auf die Längsachse des Kraftfahrzeuges verlaufenden Querrichtung vorzusehen, um so Schwappgeräusche aufgrund von Lenkbewegungen zu reduzieren oder zu verhindern (Hinterlüften der entsprechenden Kammer im Mediumbehälter).

## Patentansprüche

1. Verwendung eines Mediumbehälters für Betriebsmedien eines Kraftfahrzeuges zur Vermeidung von Schwappgeräuschen, der eine, ein Aufnahmevolumen umschliessende Hülle (3) aufweist, die eine in Fahrtrichtung angeordnete Vorderwand (4) und eine dazu gegenüberliegende Hinterwand (6) und eine Deckelwand (8), sowie Seitenwände und eine Bodenwand (7) aufweist, wobei das in dem Mediumbehälter (1) angeordnete Medium durch Lastwechsel des Kraftfahrzeuges so in Bewegung bringbar ist, dass eine Schwappwelle aufweisend eine Flüssigkeitswand ausbildbar ist, wobei zumindest ein Druckausgleichselement (24) vorgesehen ist, welches sich im Querschnitt gesehen zumindest von der Vorderwand (4) bis zur Hinterwand (6) über die gesamte Länge des Mediumbehälters (1) erstreckt, und das eine erste Öffnung im Inneren (16) des Mediumbehälters (1) zumindest an der Vorderwand (4) aufweist, welche in einem ersten Bereich (21) innerhalb des Mediumbehälters (1) angeordnet ist, wobei der erste Bereich (21) durch die Flüssigkeitswand der Schwappwelle (18), welche mit ihrem Wellenkamm (19) in Kontakt mit der Deckelwand ist, durch die Vorderwand (4) und die Deckelwand (8) bildbar ist, und das eine zweite Öffnung im Inneren (16) des Mediumbehälters (1) zumindest an der Hinterwand (6) aufweist, welche in einem zweiten Bereich (22) innerhalb des Mediumbehälters (1) angeordnet ist, wobei der zweite Bereich (22) durch die Flüssigkeitswand der Schwappwelle (18), welche mit ihrem Wellenkamm (19) in Kontakt mit der Deckelwand ist, durch die Hinterwand (6) und die Deckelwand (8) bildbar ist, und das einen Verbindungsabschnitt (26) aufweist, welcher die beiden innerhalb des Mediumbehälters (1) angeordneten Öffnungen von der jeweiligen Vorderwand (4) zur Hinterwand (6) miteinander verbindet, wobei der erste Bereich (21) durch die Flüssigkeitswand, welche mit ihrem Wellenkamm (19) in Kontakt mit der Deckelwand (8) ist, von dem zweiten Bereich (22) trennbar ist, wobei der Verbindungsabschnitt (26) einen vollständig geschlossenen und stetigen Luftpfad zwischen der ersten Öffnung und der zweiten Öffnung bildet.

2. Verwendung eines Mediumbehälters nach Anspruch 1,
**wobei**
das zumindest eine Ausgleichselement (24) als Kanal ausgeführt ist.

3. Verwendung eines Mediumbehälters nach Anspruch 1 oder 2,
**wobei**
das zumindest eine Ausgleichelement (24) als Rohrleitung ausgeführt ist.

4. Verwendung eines Mediumbehälters nach einem der vorhergehenden Ansprüche,
**wobei**
das Ausgleichselement (24) mit seinem Verbindungsabschnitt (26) außerhalb des Mediumbehälters (1) angeordnet ist, wobei Übergangsabschnitte (27,28) durch die Deckelwand (8) geführt sind, so dass die beiden Öffnungen im Inneren (16) des Mediumbehälters (1) angeordnet sind.

5. Verwendung eines Mediumbehälters nach einem der Ansprüche 1-3,
**dadurch gekennzeichnet, dass**
das Ausgleichselement (24) vollständig im Inneren (16) des Mediumbehälters (1) angeordnet ist.

6. Verwendung eines Mediumbehälters nach einem der vorhergehenden Ansprüche, der als Kraftstofftank ausgeführt ist, in dem als Betriebsmedium (2) Kraftstoff gespeichert ist.

## Claims

1. Use of a medium container for operating media of a motor vehicle for preventing sloshing noises, which medium container has a casing (3) which encloses a receiving volume and which has a front wall (4) arranged in a direction of travel, a rear wall (6) situated opposite said front wall, and a top wall (8), and also side walls and a base wall (7), wherein the medium arranged in the medium container (1) can be caused, by load alterations of the motor vehicle, to move such that a sloshing wave having a liquid wall can form, wherein at least one pressure equalization element (24) is provided which, as viewed in cross section, extends at least from the front wall (4) to the rear wall (6) over the entire length of the medium container (1), which at least one pressure equalization element has a first opening in the interior (16) of the medium container (1) at least at the front wall (4), which first opening is arranged in a first region (21) within the medium container (1), wherein the first region (21) can be formed by the liquid wall of the sloshing wave (18), which is in contact by way of its wave crest (19) with the top wall, by the front wall (4) and by the top wall (8), and which at least one pressure equalization element has a second opening in the interior (16) of the medium container (1) at least at the rear wall (6), which second opening is arranged in a second region (22) within the medium container (1), wherein the second region (22) can be formed by the liquid wall of the sloshing wave (18), which is in contact by way of its wave crest (19) with the top wall, by the rear wall (6) and by the top wall (8), and which at least one pressure equalization element has a connecting section (26) which connects the two openings arranged within the medium container (1) from the respective front wall (4) to the rear wall (6), wherein the first region (21) can be separated from the second region (22) by the liquid wall, which is in contact by way of its wave crest (19) with the top wall (8), wherein the connecting section (26) forms a completely closed and continuous air path between the first opening and the second opening.

2. Use of a medium container according to Claim 1,
wherein
the at least one equalization element (24) is in the form of a duct.

3. Use of a medium container according to Claim 1 or 2,
wherein
the at least one equalization element (24) is in the form of a pipeline.

4. Use of a medium container according to one of the preceding claims,
wherein
the equalization element (24) is arranged with its connecting section (26) outside the medium container (1), wherein transition sections (27, 28) are guided through the top wall (8) such that the two openings are arranged in the interior (16) of the medium container (1).

5. Use of a medium container according to one of Claims 1-3,
**characterized in that**
the equalization element (24) is arranged entirely in the interior (16) of the medium container (1).

6. Use of a medium container according to one of the preceding claims, which medium container is in the form of a fuel tank in which fuel is stored as operating medium (2).

## Revendications

1. Utilisation d'un contenant de fluide pour des fluides de service d'un véhicule automobile pour éviter des bruits de ballottement, lequel comprend une enveloppe (3) entourant un volume de réception, laquelle comprend une paroi avant (4) disposée dans la direction de conduite et une paroi arrière (6) opposée à celle-ci et une paroi supérieure (8), ainsi que des parois latérales et une paroi de fond (7), le fluide disposé dans le contenant de fluide (1) pouvant être amené à se déplacer par une alternance de charge du véhicule automobile, de telle sorte qu'une onde de ballottement comprenant une paroi de liquide puisse être réalisée, au moins un élément de compensation de pression (24) étant prévu, lequel, vu en section transversale, s'étend au moins à partir de la paroi avant (4) jusqu'à la paroi arrière (6) sur toute la longueur du contenant de fluide (1), et lequel comprend une première ouverture dans l'intérieur (16) du contenant de fluide (1) au moins sur la paroi avant (4), laquelle première ouverture est disposée dans une première région (21) à l'intérieur du contenant de fluide (1), la première région (21) pouvant être formée par la paroi de liquide de l'onde de ballottement (18), laquelle est en contact avec la paroi supérieure par sa crête d'onde (19), par la paroi avant (4) et la paroi supérieure (8), et lequel comprend une deuxième ouverture dans l'intérieur (16) du contenant de fluide (1) au moins sur la paroi arrière (6), laquelle deuxième ouverture est disposée dans une deuxième région (22) à l'intérieur du contenant de fluide (1), la deuxième région (22) pouvant être formée par la paroi de liquide de l'onde de ballottement (18), laquelle est en contact avec la paroi supérieure par sa crête d'onde (19), par la paroi arrière (6) et la paroi supérieure (8), et lequel comprend une portion de liaison (26), laquelle relie l'une à l'autre les deux ouvertures disposées à l'intérieur du contenant de fluide (1) à partir de la paroi avant (4) respective jusqu'à la paroi arrière (6), la première région (21) pouvant être séparée de la deuxième région (22) par la paroi de liquide qui est en contact avec la paroi supérieure (8) par sa crête d'onde (19), la portion de liaison (26) formant une voie d'air complètement fermée et continue entre la première ouverture et la deuxième ouverture.

2. Utilisation d'un contenant de fluide selon la revendication 1,
dans lequel l'au moins un élément de compensation (24) est réalisé sous forme de canal.

3. Utilisation d'un contenant de fluide selon la revendication 1 ou 2,
dans lequel l'au moins un élément de compensation (24) est réalisé sous forme de conduite tubulaire.

4. Utilisation d'un contenant de fluide selon l'une quelconque des revendications précédentes,
dans lequel l'élément de compensation (24) est disposé de telle sorte que sa portion de liaison (26) soit disposée à l'extérieur du contenant de fluide (1), des portions de transition (27, 28) étant guidées à travers la paroi supérieure (8), de telle sorte que les deux ouvertures soient disposées dans l'intérieur (16) du contenant de fluide (1).

5. Utilisation d'un contenant de fluide selon l'une quelconque des revendications 1 à 3,
**caractérisée en ce que** l'élément de compensation (24) est disposé complètement dans l'intérieur (16) du contenant de fluide (1).

6. Utilisation d'un contenant de fluide selon l'une quelconque des revendications précédentes, lequel est réalisé sous forme de réservoir de carburant dans lequel du carburant est stocké en tant que fluide de service (2).
